Europäisches Patentamt

European Patent Office

Office européen des brevets

(11) Veröffentlichungsnummer: **0 036 531**
**A1**

(12) # EUROPÄISCHE PATENTANMELDUNG

(21) Anmeldenummer: **81101615.3**

(51) Int. Cl.³: **G 01 S 3/54**

(22) Anmeldetag: **06.03.81**

---

(30) Priorität: **24.03.80 DE 3011278**

(43) Veröffentlichungstag der Anmeldung: **30.09.81**
Patentblatt **81/39**

(84) Benannte Vertragsstaaten: **FR GB IT NL**

(71) Anmelder: **Rohde & Schwarz GmbH & Co. KG, Mühldorfstrasse 15, D-8000 München 80 (DE)**

(72) Erfinder: **Schmengler, Eckhard, Dr., Birkenau 23, D-8000 München 90 (DE)**

(74) Vertreter: **Graf, Walter, Sckellstrasse 1, D-8000 München 80 (DE)**

---

(54) **Funkpeiler.**

(57) Bei einem Dopplerpeiler wird die rotierende Phasen-modulations-Antennencharakteristik durch 90° phasenver-schobenes Zusammensetzen der Ausgangssignale einer Antenne (1, 2) mit rotierender Doppelkreis-Richtcharak-teristik und einer Antenne (3) mit Rundcharakteristik ge-wonnen, wodurch sich ein sehr kleines Antennensystem ergibt.

entanwalt Dipl.-Ing. Walter Graf

D-8000 München 80
Sckellstraße 1
Telefon (089) 48 08 67
Telex 523103 (rds w)
Postscheck München 182826-804
Hypo-Bank München 3860043210
Deutsche Bank München 53103797

sen beim Europäischen Patentamt – admitted to the European Patent Office – Mandataire aggréé auprès l' Office Européen des Brevets

978-EU

- 1 -

## Funkpeiler

Die Erfindung betrifft einen Funkpeiler laut Oberbegriff des Hauptanspruches.

Funkpeiler dieser Art sind bisher als sogenannte Dopplerpeiler bekannt, bei denen der Peilwinkel aus der Phasenmodulation (hier meist als Frequenzmodulation bezeichnet) der Peilspannung gewonnen wird, welche durch eine Rotation der Peilantenne bzw. des Antennendiagramms entsteht. Dabei wird entweder eine längs eines Kreises mechanisch rotierende Peilantenne verwendet oder mehrere längs eines Kreises angeordnete Einzelantennen, die über eine entsprechende Abtasteinrichtung nacheinander abgetastet werden. Beim Dopplerpeiler wird also ein Antennensystem mit räumlich verteilten Phasenzentren benutzt. Solche Antennensysteme werden mit zunehmender Wellenlänge zwangsläufig sehr gross. Obwohl diese Art der Frequenz bzw. Phasenmodulationsauswertung zum Peilen sehr vorteilhaft ist und durch bekannte Kompensationsmassnahmen (beispielsweise nach deutschem Patent 12 98 162) eine hohe Peilempfindlichkeit erreichbar ist, ist ihre Einsatzmöglichkeit durch die Grösse des zugehörigen Antennensystems begrenzt.

Es sind auch Funkpeiler bekannt, bei denen der Peilwinkel aus der Amplitudenmodulation der Peilspannung gewonnen wird, die durch eine Antenne mit rotierender Doppelkreis-Richtcharakteristik und einer zusätzlichen Rundstrahlantenne entsteht, indem die Ausgangsspannungen der beiden Antennen gleichphasig oder gegenphasig zusammengesetzt werden. Das Antennensystem solcher Funkpeiler besitzt zwar kleiner Abmessungen, solche Peiler sind jedoch bezüglich der Peilergebnisauswertung komplizierter und störanfälliger. Eine Amplitudenmodulation des empfangenen Peilsignales kann nicht kompensiert werden und verfälscht das Peilergebnis.

Es ist Aufgabe der Erfindung, einen Funkpeiler zu schaffen, bei welchem der Peilwinkel aus der Phasenmodulation der Peilspannung gewonnen wird, bei dem jedoch ein Antennensystem mit wesentlich kleineren Abmessungen als bisher möglich benutzt wird.

Diese Aufgabe wird ausgehend von einem Funkpeiler laut Oberbegriff des Hauptanspruches durch dessen kennzeichnende Merkmale gelöst. Eine besonders vorteilhafte Weiterbildung ergibt sich nach dem Unteranspruch.

Gemäss der Erfindung wird also nicht mehr ein Antennensystem mit räumlich verteilten und auf einem Kreis umlaufenden Phasenzentren verwendet sondern vielmehr ein einfaches Antennensystem mit kleinen Abmessungen, wie es bisher bei Funkpeilern mit Auswertung der Amplitudenmodulation bekannt ist. Durch eine einfache Zusatzschaltung, nämlich einen 90°-Phasenschieber, wird erfindungsgemäss aus den Ausgangsspannungen dieses Antennensystems eine Peilspannung gewonnen, aus deren Phasenmodulation wie bei einem Dopplerpeiler mit hoher Peilempfindlichkeit

0036531

der Peilwinkel ausgewertet werden kann. Trotz der Verwendung eines Antennensystems mit extrem kleinen Abmessungen kann beim erfindungsgemässen Peiler zur Auswertung ein Gerät benutzt werden, bei dem sowohl störende Amplitudenmodulationen des empfangenen Peilsignals beispielsweise durch Begrenzer als auch eventuelle störende Frequenz- oder Phasenmodulationen des Peilsignales auf einfache Weise kompensiert werden können (beispielsweise nach DE-P 12 98 162). Gemäss der Erfindung wird also erstmals ein Umlaufpeiler geschaffen, der sowohl bezüglich äussserer Abmessungen als auch bezüglich Peilergebnisgewinnung optimal ausgebildet ist.

Für die Realisierung des Antennensystems mit rotierender Doppelkreis-Richtcharakteristik gibt es die verschiedenartigsten Möglichkeiten. Im einfachsten Fall wir ein mechanisch rotierender Rahmen benutzt. Vorzugsweise wird jedoch ein vertikaler Kreuzrahmen bzw. ein horizontaler Kreuzdipol benutzt, der periodisch umgeschaltet wird, wie dies im Prinzip bei den eingangs erwähnten AM-Umlaufpeilern bekannt ist. Auch sogenannte Adcock-Antennen sind geeignet.

Die Erfindung wird im folgenden anhand einer schematischen Zeichnung an einem Ausführungsbeispiel näher erläutert.

Das Antennensystem besteht aus zwei gekreuzten vertikalen Rahmenantennen 1 und 2 und einer zusätzlichen Mittelantenne 3. Die verstärkten Ausgangssignale der beiden Rahmen 1 und 2 werden einer Umschalteinrichtung 4 zugeführt, die in Abhängigkeit von einem Steueroszillator 5 periodisch so umgeschaltet wird, dass am Ausgang 6 eines Summiergliedes 7 ein Ausgangssignal entsteht, das dem Ausgangssignal einer Antenne mit rotierender Doppelkreis-Richtcharakteristik entspricht. Dieses Signal am Ausgang 6 wird dann mit dem einer Rundstrahlcharakteristik entsprechenden Signal des Ausgangs 8 der Mittelantenne 3 unter gegenseitiger 90° Phasenverschiebung zusammengesetzt. In dem gezeigten Ausführungsbeispiel erfolgt dies in einer sogenannten 90°-Hybride 9, genauso gut könnte aber in der einen oder anderen Leitung 6 bzw. 8 ein entsprechender 90°-Phasenschieber angeordnet sein. Am Ausgang 10 entsteht damit ein Signal, das dem einer Antenne mit rotierender Phasenmodulations-Antennencharakteristik entspricht, das dann z.B. in einem von Dopplerpeilern her bekannten Gerät 11 demoduliert und als Peilergebnis ausgewertet wird.

Durch die um 90° phasenverschobene Zusammensetzung der Ausgangssignale des Antennensystems 1, 2 und der Rundstrahlantenne 3 wird also ein rotierendes Phasendiagramm erzeugt, obwohl die Phasenzentren all dieser Antennen 1, 2 und 3 in der Drehachse liegen. Durch die 90°-Phasenverschiebung wird aus der Amplitudenmodulation eine Phasenmodulation, die wiederum einer Frequenzmodulation eines bekannten Dopplerpeilers entspricht und daher genauso wie bei einem bekannten Dopplerpeiler ausgewertet werden kann. Es können die vom Dopplerpeiler her bekannten Massnahmen zur Kompensation überlagerter Frequenz- oder Phasenmodulationen angewendet werden, ebenso die bekannten Massnahmen zur Kompensation von laufzeitbedingten Peilfehlern durch aufeinanderfolgende oder simultane Links- und Rechtsrotation der Antennencharakteristik. Die Antennencharakteristik muss nicht unbedingt über 360° rotierend sein, durch geeignete Wahl der Umschaltung der Antennen 1, 2 kann auch ein Sektorpeiler aufgebaut werden, dessen Antennencharakteristik nur einen vorbestimmten Winkelsektor überstreicht.

# Patentanwalt Dipl.-Ing. Walter Graf

D-8000 München 80
Sckellstraße 1 0036531
Telefon (089) 4 48 09 66
Telex 523 703 (rus d)
Postscheck München 182826-804
Hypo-Bank München 3 860 043 210
Deutsche Bank München 53 103 797

zugelassen beim Europäischen Patentamt – admitted to the European Patent Office – Mandataire aggréé auprès l' Office Européen des Brevets

978-EU

ROHDE & SCHWARZ GmbH & Co. KG   8000 München 80

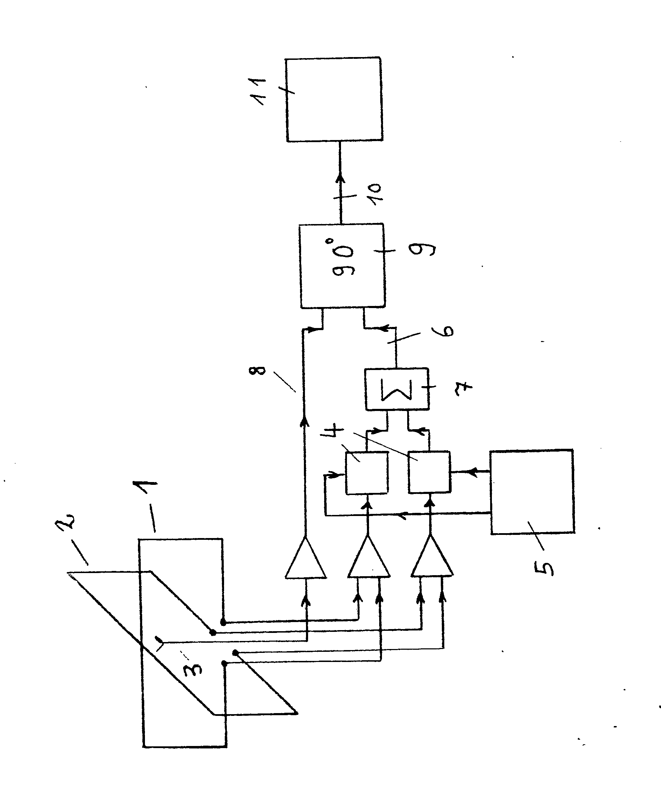

Patentansprüche

1. Funkpeiler, bei welchem der Peilwinkel aus der Phasenmodulation der Peilspannung gewonnen wird, welche durch eine - gegebenenfalls simulierte - Rotation des Antennendiagramms entsteht, d a d u r c h   g e - k e n n z e i c h n e t,  dass die Peilspannung durch Addition der um 90° gegeneinander phasenverschobenen Spannungen einer Rundstrahlantenne (3) und einer Antenne (1,2) mit rotierender Doppelkreis-Richtcharakteristik erzeugt wird.

2. Funkpeiler nach Anspruch 1, d a d u r c h   g e - k e n n z e i c h n e t,  dass die rotierende Doppel-kreis-Richtcharakteristik durch periodisch umge-schaltete gekreuzte vertikale Rahmen oder horizontale Dipole erzeugt wird.

| | Europäisches Patentamt | **EUROPÄISCHER RECHERCHENBERICHT** | 0036531 Nummer der Anmeldung |
| --- | --- | --- | --- |
| | | | EP 81 10 1615.3 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
| --- | --- | --- | --- |
| A | DE - A1 - 2 631 008 (ROHDE U. SCHWARZ) <br> * Fig. 1 bis 2 * <br> -- | | G 01 S   3/54 |
| A | DE - B  - 1 298 162 (ROHDE U. SCHWARZ) <br> * Fig. 1 bis 8 * <br> -- | | |
| A | DE - B - 1 255 738 (TELEFUNKEN PATENT-VERWERTUNGSGESELLSCHAFT) <br> * Fig. 1 bis 2 * <br> -- | | |
| A | DE - C - 1 056 203 (INTERNATIONAL STANDARD ELECTRIC CORP.) <br> * Fig. 1 bis 6 * <br> -- | | RECHERCHIERTE SACHGEBIETE (Int. Cl.³) <br><br> G 01 S   3/00 |
| A | US - A - 3 121 871 (J.M. BEUKERS) <br> * Fig. 1 bis 4 * <br> -- | | |
| A | US - A - 2 943 323 (P.A. RYAN) <br> * Fig. 1 bis 5 * <br> ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
| --- | --- | --- |
| Berlin | 18-06-1981 | BREUSING |

EPA form 1503.1   06.78